# FASCICULE DE BREVET EUROPEEN

(11) **EP 2 900 733 B1**
(45) Date de publication et mention de la délivrance du brevet: **14.09.2016**
(21) Numéro de dépôt: 13766544.4
(22) Date de dépôt: 26.09.2013
(51) Int. Cl.: C08G 81/02, C08F 8/14, C08F 8/40, C04B 24/24

(54) **COPOLYMÈRES À GROUPEMENTS GEM-ACÉTOPHOSPHONÉS**
COPOLYMERE MIT GEM-ACETOPHONGRUPPEN
COPOLYMERS HAVING GEM-ACETOPHONE GROUPS

(30) Priorité: 27.09.2012 FR 1259124
(43) Date de publication de la demande: 05.08.2015
(73) Titulaire: Chryso, 92440 Issy-Les-Moulineaux (FR)
(72) Inventeur: CHOUGRANI, Kamel, F-45470 Loury (FR); LEISING, Frédéric, F-60300 Avilly Saint Léonard (FR)
(74) Mandataire: Lavoix
(86) Numéro de dépôt international: PCT/EP2013/070040
(87) Numéro de publication internationale: WO 2014/049037

(56) Documents cités:
- EP-A1- 1 031 574
- EP-A1- 1 923 409
- WO-A1-00/39359
- FR-A1- 2 892 420
- US-A- 5 336 316

## Description

La présente invention concerne des copolymères à groupements gem-acétophosphonés, un procédé pour leur préparation et leur utilisation à titre de fluidifiants de suspensions de particules minérales, notamment des compositions de liants hydrauliques, par exemple ciment, et de formulations de plâtre.

### [Etat de la technique]

Généralement, on ajoute aux compositions de ciment des adjuvants permettant d'améliorer leurs propriétés. Parmi les propriétés fondamentales des compositions de ciment sont les propriétés rhéologiques et leur évolution avec le temps, liées à l'ouvrabilité, ainsi que les résistances, notamment résistances mécaniques.

On utilise en particulier des fluidifiants ou plastifiants, lesquels ont pour effet de fluidifier les compositions de ciment et permettent ainsi de réduire la quantité d'eau ajoutée, ce pourquoi ils sont également désignés comme réducteurs d'eau. La composition présente alors une densité plus élevée et résulte en un matériau présentant une résistance mécanique plus importante.

Certains polymères solubles, appelés superplastifiants, permettent de réduire davantage la quantité d'eau. On connaît notamment des superplastifiants du type des acides polycarboxyliques polyalkoxylés (PCP).

Le document FR 2892420 décrit des superplastifiants à groupes phosphonés et polyoxyalkylés pour la fluidification de suspensions de particules minérales, dans lesquels les groupes phosphonés sont des groupes amino-bisalkylènephosphoniques de formule (A) suivante : 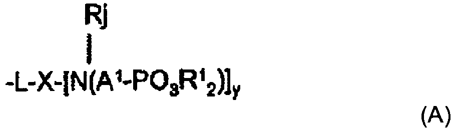 dans laquelle L représente un groupe de liaison à la chaîne principale et X est un groupe alkylène ou oxyalkylène. Les monomères phosphonés peuvent être obtenus notamment par diphosphonation selon les conditions de la réaction de MOEDRITZER - IRANI, par réaction d'une amine avec du formaldéhyde et de l'acide phosphoreux.

Pour accéder à ces structures, la modification chimique d'un polymère par post-greffage est aussi proposée. Ce procédé comporte deux étapes, à savoir la copolymérisation d'un acide carboxylique insaturé avec un ester (méth)acrylique polyéthoxylé suivie du greffage d'un synthon alcool ou amine phosphoné ou, en variante, la polymérisation de l'acide carboxylique insaturé puis une estérification par des composés polyoxyalkylés suivie du greffage d'un synthon phosphoné.

Il est également connu de Mosquet et al (Journal of Applied Polymer Sciences, 1997, 65, 2545-255) des polymères jouant le rôle de fluidifiant de suspensions de particules minérales. Ces polymères comprennent notamment des fonctions phosphoniques ou carboxyliques. Ce document montre que les polymères comprenant des substituants carboxyliques sont de moins bons fluidifiants que les polymères comprenant des substituants phosphoniques.

### [Problème technique]

Le but de l'invention est de proposer de nouveaux copolymères modifiés utiles à titre d'adjuvants pour suspensions de particules minérales.

Un autre but est de proposer un procédé de préparation de ces copolymères simple et économique et en particulier ne nécessitant pas l'utilisation de formaldéhyde.

Un autre but encore est de proposer des adjuvants pour suspensions de particules minérales présentant un pouvoir réducteur d'eau important, un bon maintien de rhéologie, une faible sensibilité de ces performances à des fluctuations de concentration en sulfates solubles, notamment sulfates alcalins et aux argiles, notamment argiles gonflantes.

### [Résumé de l'invention]

Les buts évoqués ci-dessus sont atteints selon l'invention par des copolymères comportant des groupements gem-acétophosphoniques.

Aussi, selon l'invention est proposé un copolymère comprenant une chaîne principale hydrocarbonée et des groupes latéraux, dans lequel les groupes latéraux comprennent des groupes carboxyliques, des groupes polyoxyalkylés et des groupes gem-acétophosphonés.

Selon un deuxième aspect, l'invention vise un procédé de préparation de ces copolymères comprenant les étapes consistant à :
(i) polymériser un monomère portant un groupe carboxylique, éventuellement en présence d'un monomère portant un groupe polyoxyalkylé; et
(ii) greffer le polymère obtenu avec un composé réactif gem-acétophosphoné.

Selon un troisième aspect, l'invention vise un procédé de préparation de ces copolymères par copolymérisation, en masse ou en solution, en présence d'un catalyseur approprié, de monomères susceptibles de polymériser portant respectivement les groupes recherchés (groupes carboxyliques, gem-acétophosphoniques et polyoxyalkylés).

Le copolymère gem-acétophosphoné ainsi obtenu est avantageusement formulé avant utilisation, de préférence sous forme de solution, notamment de solution aqueuse. La formulation peut également comporter des additifs habituels en la matière.

Selon un autre aspect, l'invention vise donc un adjuvant pour suspensions de particules minérales comprenant le copolymère selon l'invention sous forme de solution dans un solvant approprié ou sous forme sèche, notamment de poudre.

Par ailleurs, l'invention vise selon un autre aspect l'utilisation du copolymère selon l'invention pour la fluidification de suspensions de particules minérales et/ou pour le maintien de l'ouvrabilité de liants hydrauliques. Elle vise également l'utilisation du copolymère selon l'invention pour réduire la sensibilité de compositions hydrauliques aux argiles, notamment argiles gonflantes et aux sulfates solubles, notamment sulfates alcalins.

Enfin, selon un dernier aspect, l'invention vise une composition de particules minérales comprenant le copolymère selon l'invention.

### [Définitions]

Dans le cadre du présent exposé, on entend par le terme «suspension de particules minérales » ou « composition hydraulique » tout liant à prise hydraulique, dit liant hydraulique (on entend par le terme « liant hydraulique » désigner tout composé ayant la propriété de s'hydrater en présence d'eau et dont l'hydratation permet d'obtenir un solide ayant des caractéristiques mécaniques), c'est-à-dire notamment outre les ciments tels que les ciments Portland, les ciments alumineux, les mortiers comprenant en outre des granulats fins, les bétons comprenant en outre des granulats grossiers ou encore les sulfates de calcium anhydres ou semihydratés. Par l'expression ciment on entend selon l'invention un ciment de type CEM I, CEM II, CEM III, CEM IV ou CEM V selon la norme Ciment NF EN 197-1. Le terme englobe également les charges minérales inertes telles que les sulfates de calcium dihydratés ainsi que le carbonate de calcium, la Dolomie, la silice, l'hydroxyde de titane et les composés argileux. La composition hydraulique peut également comprendre des additions minérales. L'expression additions minérales désigne les laitiers (tels que définis dans la norme Ciment NF EN 197-1 paragraphe 5.2.2), les laitiers d'aciérie, les matériaux pouzzolaniques (tels que définis dans la norme Ciment NF EN 197-1 paragraphe 5.2.3), les cendres volantes (telles que définies dans la norme Ciment NF EN 197-1 paragraphe 5.2.4), les schistes calcinés (tels que définis dans la norme Ciment NF EN 197-1 paragraphe 5.2.5), les calcaires (tels que définis dans la norme Ciment NF EN 197-1 paragraphe 5.2.6) ou encore les fumées de silices (telles que définies dans la norme Ciment NF EN 197-1 paragraphe 5.2.7) ou leurs mélanges. D'autres ajouts, non actuellement reconnus par la norme Ciment NF EN 197-1 (2001), peuvent aussi être utilisés. Il s'agit notamment des métakaolins, tels que les métakaolins de type A conformes à la norme NF P 18-513, et des additions siliceuses, telles que les additions siliceuses de minéralogie Qz conformes à la norme NF P 18-509.

La composition à base de liant hydraulique est par exemple un béton. Par le terme béton, on entend un mélange de liants hydrauliques, de granulats, d'eau, éventuellement d'additifs, et éventuellement d'additions minérales. Dans le cadre de l'invention, le terme béton comprend les mortiers.

On entend par le terme « chaîne hydrocarbonée » un groupe comportant des atomes de carbone et d'hydrogène, aliphatique, saturé ou insaturé, aromatique, arylalkyle ou alkylaryle, linéaire ou ramifié et éventuellement interrompu et/ou terminé par un ou plusieurs hétéroatomes tels que S, O, N, P.

On entend par le terme « groupe gem-acétophosphoné » désigner des groupes comportant un groupe phosphonate et un groupe acétate liés à un même atome de carbone. Ces groupements sont de formule

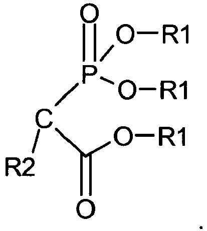

On entend par le terme « groupe alkyle » un groupe alkyle linéaire, ramifié ou cyclique, généralement comprenant de 1 à 20 atomes de carbone, par exemple de 1 à 10 atomes de carbone.

On entend de la même façon par le terme « groupe alkylène » un groupe alkylène linéaire ou cyclique.

On entend par le terme « argile gonflante » des argiles dont les espaces interfoliaires occupés par des cations compensateurs sont capables de gonfler en adsorbant une ou plusieurs couches d'eau.

On entend par le terme « sulfate soluble » les sulfates compris dans le liant hydraulique qui sont solubles notamment dans l'eau, par exemple dans l'eau de gâchée. La quantité de sulfates solubles est déterminée en équivalent Na₂O selon la norme NF EN 196-2. Les sulfates solubles sont notamment les sulfates alcalins.

### [Description détaillée de l'invention]

Les copolymères selon l'invention sont des copolymères peignes comportant une chaîne principale hydrocarbonée d'une part et des groupes latéraux d'autre part. Ils sont caractérisés en outre par la présence à titre de groupes latéraux de groupes carboxyliques, des groupes polyoxyalkylés et des groupes gem-acétophosphonés.

La présence simultanée de ces trois types de groupes confère au copolymère les propriétés intéressantes à titre d'adjuvant, notamment de superplastifiant, pour des suspensions de particules minérales. De façon particulièrement avantageuse, la présence simultanée de ces trois types de groupe permet une utilisation du copolymère à des dosages, dans la suspension de particules minérales, plus faibles que les PCP classiques ne comprenant pas de groupe acétophosphonique, tout en garantissant des propriétés intéressantes, notamment en termes de maintien d'ouvrabilité, temps de prise, résistances mécaniques tant précoces qu'ultimes, faibles sensibilités aux sulfates solubles, notamment sulfate alcalins et aux argiles, notamment argiles gonflantes.

### [Copolymères]

Dans leur définition la plus large, les copolymères proposés selon l'invention sont des polymères de type PCP modifiés comportant des groupes gem-acétophosphonés.

Le polymère est de type peigne, comportant une chaîne principale et des groupes latéraux. La chaîne principale hydrocarbonée ne comprend de préférence pas d'hétéroatomes. Particulièrement préférée est une chaîne principale linéaire.

Selon l'invention, le copolymère comprend par ailleurs des groupes latéraux comportant des groupes carboxyliques et des groupes polyoxyalkylés, et en outre des groupes gem-acétophosphonés. Avantageusement, les groupes latéraux polyoxyalkylés sont liés à la chaîne principale par une liaison ester, éther ou amide.

De manière préférée, les groupes gem-acétophosphonés répondent à la formule (IA) ci-dessous : 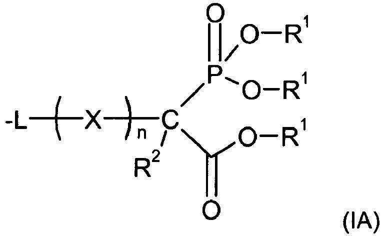 dans laquelle :

L représente un groupe de liaison à la chaîne principale, en particulier une liaison, un atome d'oxygène, un groupe -NR⁴-, (R⁴ pouvant être hydrogène ou un groupe alkyle en C₁ à C₆), un atome de soufre ou un groupe alkylène, de préférence, L est un atome d'oxygène ou un groupe -NR⁴-;
n représente 0 ou 1 ;
X est un groupe espaceur, en particulier un groupe alkylène en C₁ à C₂₀ éventuellement substitué ou un enchaînement de groupes de formule -(QO)ₘ- dans laquelle Q représente un groupe alkylène de 2 à 4 atomes de carbone ou un mélange de ces groupes d'alkylène, m étant un nombre entier variant de 1 à 500, de préférence, X est un groupe alkylène en C₁ à C₆;
R¹ est, indépendamment les uns des autres, un groupe monovalent, notamment hydrogène, un groupe alkyle de C₁ à C₆ ou groupe de formule -(QO)ₘR⁵ dans laquelle Q représente un groupe alkylène de 2 à 4 atomes de carbone ou un mélange de ces groupes d'alkylène, m est un nombre entier variant de 1 à 500 et R⁵ est hydrogène ou un alkyle en C₁ à C₃, ou R¹ est un cation, notamment un cation alcalin, alcalino-terreux ou ammonium; de préférence R¹ est un atome d'hydrogène ; et
R² est un groupe monovalent, notamment un atome d'hydrogène ou un groupe hydroxyle ou un groupe alkyle en C₁ à C₁₀, de préférence, R² est un groupe hydroxyle ou un atome d'hydrogène, notamment R² est un atome d'hydrogène.

De préférence, dans les composés (la), n égal 0 ou n égal 1 et X est un groupe alkylène en C₁ à C₆.

Le groupement L est le plus souvent lié à un groupe carboxylique du copolymère et l'atome d'oxygène y forme dès lors une fonction ester et les groupes amines une fonction amide.

La proportion des groupes gem-acétophosphonés respectifs dans le copolymère selon l'invention peut varier largement. En particulier, les copolymères comprennent 0,1 à 60 %, en particulier 1 à 40% et tout particulièrement 2 à 10% en nombre de groupes latéraux gem-acétophosphonés.

Le copolymère comporte également à titre de groupes latéraux des groupes polyoxyalkylés. Ces groupes polyoxyalkylés peuvent être liés à la chaîne principale directement ou par l'intermédiaire de groupes formés avec les fonctions carboxyliques présentes, notamment par une liaison ester ou amide.

Ils peuvent également être intégrés dans les groupes gem-acétophosphonates, notamment de formule (I).

Les groupes polyoxyalkylés peuvent être notamment de formule (II) ci-dessous :

-Rₑ-Z-A (II)

dans laquelle :
Rₑ est un groupe alkylène en C₁ à C₁₂ ou un groupe C=O ou encore absent ; et
Z est un atome d'oxygène ou un groupe N-R⁴, R⁴ pouvant être un hydrogène ou un groupe alkyle en C₁ à C₆ ; et
A est un groupe de formule -(QO)ₘ-R³ dans laquelle :
   Q représente un groupe alkylène de 2 à 4 atomes de carbone ou un mélange de ces groupes d'alkylènes ;
   m est un nombre entier variant de 1 à 500 ; et
   R³ représente un atome d'hydrogène ou un groupe alkyle, aryle, alkylaryle ou arylalkyle en C₁ à C₁₂, de préférence méthyle.

Le copolymère comprend en général 0,001 à 80 % en nombre, en particulier 10 à 50% en nombre de groupes polyoxyalkylés.

Selon l'invention, le copolymère comporte par ailleurs des groupes carboxyliques, autres que ceux présents dans les groupements acétophosphoniques.

De préférence, ces groupes carboxyliques répondent à la formule (III) ci-dessous :

-C(O)-O-R_{d} (III)

dans laquelle :
R_{d} représente H ou un groupe alkyle, aryle, alkylaryle ou arylalkyle en C₁ à C₁₂, ou un cation alcalin, alcalino-terreux ou ammonium.

La proportion des groupes carboxyliques, autres que ceux présents dans les groupes acétophosphonates, dans le copolymère peut varier de 0 à 90%, en particulier de 40 à 80% en nombre de groupes carboxyliques.

Ces groupes carboxyliques peuvent être sous forme d'acide non dissocié. Le plus souvent, ils seront cependant au moins partiellement ou totalement neutralisés, estérifiés ou amidifiés.

Le copolymère selon l'invention présente généralement une masse molaire moyenne comprise entre 1000 et 220 000 (Mw), de préférence entre 10 000 et 110 000 (Mw) tel que déterminé par SEC (« size exclusion chromatography », chromatographie liquide par exclusion moléculaire) en équivalent de polyoxyéthylène étalon.

L'indice de polymolécularité Ip est de préférence compris entre 1 et 5, de préférence entre 1,5 et 3. L'indice de polymolécularité étant le rapport entre la masse moléculaire en poids (Mw) et la masse moléculaire en nombre (Mn).

Le taux d'ester dans le copolymère selon l'invention peut varier dans une large mesure. Il est de préférence de 10 à 70%, par exemple de 20 à 50%.

Le taux d'ester théorique est déterminé à partir du nombre de moles d'acide introduit (qui peut être déterminé via l'indice d'acide (ou indice d'acidité) du polyacide utilisé) et le nombre de moles de groupe polyoxyalkylé introduit. Le taux d'ester réel est déterminé à partir du nombre de moles d'acide introduit (qui peut être déterminé via l'indice d'acide de l'acide utilisé) et le nombre de mole résiduel de groupe polyoxyalkylé.

Les valeurs de taux d'ester données dans la présente description et dans les exemples correspondent au taux d'ester réel.

### [Procédé de préparation des copolymères selon l'invention]

Selon un deuxième aspect, l'invention propose un procédé de préparation du copolymère greffé par des groupes gem-acétophophonés décrit ci-dessus.

Plusieurs types de réactions peuvent convenir pour la préparation du copolymère selon l'invention.

Notamment, il peut être préparé par copolymérisation de monomères appropriés ou par modification d'un polymère par greffage de groupes latéraux. Ce dernier procédé est aussi appelé post-greffage.

Ainsi, selon un mode de réalisation, le copolymère décrit est préparé par copolymérisation, en masse ou en solution, en présence d'un catalyseur approprié, de monomères susceptibles de polymériser portant respectivement les groupes recherchés. On peut ainsi polymériser un mélange comprenant un monomère portant un groupe gem-acétophosphonate, un monomère portant un groupe carboxylique et éventuellement un monomère portant un groupe polyoxyalkylé.

Un monomère approprié portant le groupe gem-acétophosphonate est notamment, vinylique, (méth)acrylique, ou (méth)acrylamide porteur d'un motif gem-acétophosphonate.

Un monomère portant un groupe polyoxyalkylé approprié est notamment le (méth)acrylate ou (méth)acryamide de méthoxypolyéthylène glycol.

Le monomère portant un groupe carboxylique peut être en particulier choisi parmi les acides carboxyliques insaturés tels que l'acide acrylique, l'acide méthacrylique, l'acide maléique, l'acide fumarique, l'acide itaconique, leurs mélanges et leurs dérivés substitués ou encore un composé susceptible de générer des fonctions carboxyliques insaturés in situ, comme l'anhydride maléique.

Le copolymère selon l'invention peut alors être obtenu par copolymérisation de ces monomères, notamment par voie radicalaire dans les conditions habituelles en présence d'un amorceur approprié.

Selon un autre mode de réalisation, le polymère est préparé par un procédé dit de « post-greffage ». Dans ce procédé, un polymère comprenant une chaîne hydrocarbonée et des groupes latéraux carboxyliques et éventuellement des groupes latéraux polyalkoxylés est modifié par greffage de groupes gem-acétophosphonés.

Le greffage est réalisé de préférence par réaction des groupes carboxyliques avec un composé gem-acétophosphoné portant une fonction réactive, notamment un groupe alcool ou amine, primaire ou secondaire.

Aussi, selon un deuxième aspect, l'invention vise un procédé de préparation du copolymère décrit ci-dessus comprenant les étapes consistant à :
(i) polymériser un monomère portant un groupe carboxylique, éventuellement en présence d'un monomère portant un groupe polyoxyalkylé; et
(ii) greffer le polymère obtenu avec un composé réactif gem-acétophosphoné.

En variante, on peut polymériser le monomère carboxylique puis estérifier au degré souhaité les groupes carboxyliques par des composés polyoxyalkylés, comme cela est décrit par exemple dans la demande de brevet FR 2 776 285, et greffer un composé réactif gem-acétophosphoné. De préférence, le monomère carboxylique est polymérisé puis estérifié au degré souhaité par des composés polyoxyalkylés, comme cela est décrit par exemple dans la demande de brevet FR 2 776 285, puis greffer le produit obtenu avec un composé réactif gem-acétophosphoné.

De préférence, le composé réactif gem-acétophosphoné est un alcool ou une amine gem-acétophosphoné, les amines étant préférées en raison de leur meilleure réactivité à basse température et également du fait que les amides qu'elles génèrent sont stables dans une gamme de pH comprise entre 10 et 13.

Avantageusement, le composé réactif gem-acétophosphoné est de formule (I) suivante : 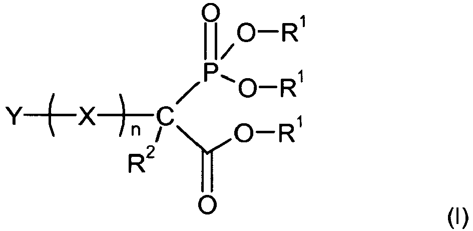 dans laquelle :
Y est un groupe fonctionnel susceptible de réagir avec les fonctions carboxyliques du polymère, notamment un groupe hydroxyle, amine primaire ou secondaire, isocyanate ou thiol, de préférence Y est un groupe hydroxyle, amine primaire ou secondaire, isocyanate ;
n représente 0 ou 1
X un groupe espaceur, en particulier un groupe alkylène en C₁ à C₂₀ éventuellement substitué ou un enchaînement de groupes de formule -(QO)ₘ dans laquelle Q représente un groupe alkylène de 2 à 4 atomes de carbone ou un mélange de ces groupes d'alkylène, de préférence, X est un groupe alkylène en C₁ à C₆, m étant un nombre entier variant de 1 à 500 ;
R¹ est, indépendamment les uns des autres, un groupe monovalent, notamment hydrogène, un cation, notamment un cation alcalin, alcalino-terreux ou ammonium ou un groupement alkyle de C₁ à C₆ et de préférence de C₁ à C₃ ; de préférence R¹ est l'hydrogène ou un groupement alkyle de C₁ à C₃ ; et
R² est un groupe monovalent, notamment hydrogène, hydroxyle ou alkyle en C₁ à C₁₀, de préférence, R² est un groupe hydroxyle ou un atome d'hydrogène.

Le polymère à greffer ne comportera pas nécessairement des groupes polyoxyalkylés dès lors que le composé gem-acétophosphoné en comporte.

La réaction de greffage peut avantageusement être réalisée à température supérieure à 120°C, de préférence entre 150 et 200°C, et en particulier entre 170 et 180°C. L'eau formée par la réaction est alors éliminée du mélange réactionnel par évaporation, et le produit réactionnel est récupéré sous forme de résidu sec.

Les groupes carboxyliques ou phosphoniques présents dans le produit réactionnel peuvent être ensuite totalement ou partiellement neutralisés.

### [L'adjuvant]

Selon un troisième aspect, l'invention propose un adjuvant pour suspensions de particules minérales comprenant le copolymère décrit.

Afin d'en faciliter la mise en oeuvre et le dosage, l'adjuvant peut être présenté sous forme de solution dans un solvant approprié.

De préférence, le solvant approprié comprend ou est constitué d'eau. Dans certains cas, l'utilisation d'un autre solvant, tel qu'un alcool ou d'un glycol, par exemple éthylène glycol ou glycérol, peut être envisagée en complément ou en alternative, par exemple pour faciliter la solubilisation.

La concentration de l'adjuvant en polymère dépend principalement de l'application envisagée. Généralement, l'adjuvant comprend de 1 à 50, de préférence 10 à 30% en poids de polymère par rapport au poids total.

En variante, l'adjuvant peut également être présenté sous forme sèche, notamment en poudre.

La formulation de l'adjuvant peut par ailleurs comprendre d'autres additifs habituels, tels que des agents anti-mousse ; des accélérateurs ; des retardateurs ; des agents hydrofuges ; des agents modificateurs de rhéologie tels que des agents viscosants, des thixotropants ou des agents augmentant le seuil d'écoulement ; d'autres dispersants, des entraîneurs d'air ou des stabilisants d'agents anti-mousse.

### [Utilisation des copolymères selon l'invention]

Selon un quatrième aspect, l'invention propose l'utilisation de l'adjuvant pour la fluidification de suspensions de particules minérales et pour le maintien de l'ouvrabilité de liants hydrauliques.

A titre de composition comprenant un liant hydraulique, on peut mentionner en particulier les compositions de ciment, et notamment les bétons, notamment les bétons préfabriqués et les bétons prêts à l'emploi. Ces bétons peuvent être destinés notamment au bâtiment et au génie civil.

La quantité d'adjuvant à ajouter à la suspension de particules minérales dépend bien entendu des propriétés recherchées et de l'application envisagée. On observe que pour les compositions préférées de l'invention, ce dosage varie en revanche peu avec la nature du milieu, et en particulier peu de la composition chimique des liants hydrauliques utilisés.

Généralement, pour une composition de liant hydraulique, notamment composition de ciment, un dosage en adjuvant de 0,01 à 2%, de préférence de 0,05 à 1% et tout particulièrement de 0,1 à 0,5% en poids en polymère par rapport au poids du liant hydraulique, notamment ciment est approprié pour la plupart des applications standards.

A titre indicatif, un dosage efficace en adjuvant pour la préparation d'une composition de béton prêt à l'emploi est de 0,7 à 1,5% d'une formulation à 20% en poids d'extrait sec par rapport au poids de ciment.

Le mécanisme d'action des polymères décrits n'est pas tout à fait compris, étant entendu que celui des super-plastifiants dans les ciments n'est pas encore complètement élucidé de manière générale.

On suppose toutefois que l'effet fluidifiant des super-plastifiants résulte principalement de forces de répulsion mises en jeu entre les copolymères adsorbés sur la surface des grains.

La présence conjuguée, dans les copolymères à groupes gem-acétophosphonés selon l'invention, de longues chaînes polyoxyalkylées faisant effet de dispersion, et de groupes phosphonate et carboxylate ayant une forte capacité de complexation et un pouvoir d'adsorption exceptionnel vis-à-vis de cations di-ou trivalents tels que le calcium ou l'aluminium, est supposée être la raison pour les propriétés particulières à titre d'adjuvant.

Par ailleurs, il a été observé, de façon surprenante, que les copolymères gem-acétophosphonés selon l'invention présentent un excellent compromis pouvoir réducteur d'eau - maintien de rhéologie sur une grande plage de concentration en chaînes polyoxyalkylées. Il a de plus, de façon surprenante, été observé que les copolymères de l'invention pouvaient être utilisés à des dosages plus faibles, dans les compositions à base de liant hydraulique, que les PCP classiques ne comprenant pas de groupement acétophosphonique.

Il a été constaté en outre que les copolymères selon l'invention présentent une sensibilité réduite aux sulfates solubles, notamment sulfates alcalins, présents notamment dans les ciments.

En effet, les essais conduits ont démontré que la fonctionnalisation des PCP par des synthons gem-acétophosphoniques permet de perturber l'adsorption des ions sulfate à la surface des particules de ciment et donc de favoriser celle du copolymère fonctionnalisé et de ce fait son action dispersante.

Cette adsorption diminue fortement dans le cas de teneurs en ions sulfates élevées par suite de la compétition d'adsorption, sur la surface des grains de ciment, entre les ions sulfates et le copolymère. Ainsi, des teneurs élevées en sulfates solubles, notamment sulfates alcalins, conduisent généralement à une faible réduction d'eau, sans doute due à une adsorption initiale plus faible du copolymère. Toutefois, on observe le plus souvent une meilleure ouvrabilité des compositions, que l'on suppose être liée à une meilleure disponibilité du copolymère dans le liquide interstitiel lequel permet de prolonger l'effet dispersant.

Par ailleurs, le copolymère selon l'invention présente avantageusement une sensibilité réduite aux argiles, notamment argiles gonflantes, souvent présentes dans les sables et fillers calcaires constitutifs de suspensions de particules minérales.

En effet, la présence d'argiles, notamment argiles gonflantes, dans les compositions hydrauliques affecte l'efficacité des super-plastifiants du fait de leur adsorption sur la surface de ces argiles, notamment argiles gonflantes, et de l'intercalation de leurs greffons polyéthoxylés dans les espaces inter-foliaires de ces argiles. La diminution du maintien de fluidité requiert alors d'augmenter le dosage en adjuvant, ce qui à son tour engendre des coûts et au-delà peut entraîner une dégradation d'autres propriétés telles que la résistance en compression et la durabilité du matériau et qui peut par ailleurs conduire à l'apparition de fissurations.

Il est supposé que cet effet avantageux est lié au fait que la présence de groupements gem-acétophosphoniques dans les copolymères selon l'invention augmente leur affinité pour la surface des grains de ciment aux dépens de celle des particules d'argile. Ce phénomène peut être dû à l'apport de charges anioniques supplémentaires, lié à la substitution d'un groupe carboxylate par 2 fonctions phosphonate et 1 fonction carboxylate, qui rendent plus difficile l'approche vers les argiles et donc l'adsorption à leur surface.

De façon préférée, les copolymères de l'invention présentant un taux d'ester de 30 à 70%, de préférence de 30 à 50%, présentent une faible sensibilité aux argiles, notamment argiles gonflantes.

Les copolymères greffés obtenus comme décrit ci-dessus sont particulièrement intéressants à titre de plastifiants de suspensions de particules minérales, notamment de compositions de ciment et de formulations de plâtre.

En effet, ils présentent :
- un pouvoir réducteur d'eau élevé,
- une insensibilité aux sulfates solubles, notamment sulfates alcalins, des ciments,
- une diminution de la sensibilité aux argiles, notamment argiles gonflantes, présentes dans les sables,
- un très bon pouvoir fluidifiant de compositions hydrauliques avec un très bon maintien de fluidité.

Les copolymères selon l'invention peuvent être utilisés directement dans la composition de particules minérales, notamment composition de liant hydraulique. Ils peuvent également être mis en oeuvre lors du broyage des particules minérales, notamment du liant hydraulique, préalable à la préparation de la composition.

### [Compositions de particules minérales]

Enfin, selon un dernier aspect, l'invention vise une composition de particules minérales comprenant le copolymère selon l'invention.

Les compositions ainsi adjuvantées présentent une ouvrabilité prolongée avec un faible dosage, y compris en présence de teneurs en sulfates solubles, notamment sulfates alcalins, et/ou en argiles, notamment argiles gonflantes, élevées. Elles sont de ce fait intéressantes pour un large éventail d'applications, en particulier les bétons prêts à l'emploi, les bétons autoplaçants, les bétons à haute ou très haute performance (BHP et BTHP) ou les bétons de préfabrication.

L'invention sera mieux expliqué au regard des exemples qui suivent, donnés à titre non limitatif.

### EXEMPLES

### A. Préparation du synthon acétophosphoné

### Préparation de l'acide 2-hydroxy phosphono acétique (HPAA)

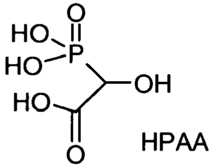

Ce composé est disponible commercialement, notamment sous l'appellation Belcor575^{®} auprès de la société BWA.

Ce composé peut également être préparé par réaction du trichlorure de phosphore PCl₃ sur l'acide glycolique (HOCH₂CO₂H) suivie d'une réaction d'hydrolyse.

Ce composé peut également être préparé à partir d'un ester éthylique de l'acide glycolique et de diéthylphosphite puis hydrolysé en milieu acide ou traitement par le bromure de triméthylsilyle puis hydrolysé comme décrit dans le brevet EP0027199.

### B. Préparation des polymères

### Exemple 1A et 1B. Préparation d'un copolymère polycarboxylique polyalkoxylé référence

Dans un ballon bicol de 500 mL muni d'une agitation magnétique, surmonté d'un réfrigérant et d'un inertage à l'azote et placé dans un bain d'huile thermostaté, on charge 73.57g (323.4mmoles) d'acide polyméthacrylique (Mn= 4100 g/mol ; extrait sec = 30%, indice d'acidité 181,1mg KOH/g) puis on introduit 0,48g (5,95mmoles) de soude (solution aqueuse de NaOH à 50% en poids). On procède alors au chargement de 34,35g (46mmoles) de méthoxypolyéthylèneglycol (MPEG) de masse molaire 750 g/mole puis de 91,60g (46 mmoles) de méthoxypolyéthylèneglycol (MPEG) de masse molaire 2000 g/mole et l'on porte la température du milieu réactionnel à 175°C. Lorsque la température du milieu réactionnel atteint 100°C, on met le réacteur sous vide partiel (<20 mbar).

On prend comme T0, temps de début de réaction, le moment où le milieu réactionnel devient homogène. On laisse la réaction d'estérification se poursuivre pendant 7 h à 175°C avant de laisser le milieu réactionnel revenir à température ambiante.

On obtient une base anhydre présentant une masse de copolymère peigne de 147,5 g soit 73,8% par rapport au mélange réactionnel initial.

L'exemple 1A correspond à un polymère à 27,5% de taux d'ester et l'exemple 1B à un polymère à 38,5% de taux d'ester.

Le taux d'ester est mesuré à partir de l'indice d'acide de l'acide polyméthacrylique qui donne accès au nombre de moles d'acide introduites. La détermination du nombre de moles de MPEG résiduel par GPC permet de déduire le taux d'ester réel.

### Exemple 2A et 2B. Préparation de copolymères de type PCP greffés HPAA selon l'invention

Il a été montré que l'introduction simultanée du synthon gem acétophosphonique avec les composés polyalkoxylés perturbe la réaction d'estérification.

Une introduction différée dans le milieu réactionnel en revanche, par exemple au bout de 4 heures de réaction, permet de retrouver un taux de greffage des MPEG équivalent à celui de la réaction de référence sans synthon acétophosphoné.

Ce sont ces conditions opératoires qui ont été retenues pour la suite de l'étude.

Dans un ballon bicol de 500 mL muni d'une agitation magnétique, surmonté d'un réfrigérant et d'un inertage à l'azote et placé dans un bain d'huile thermostaté, on charge 73.57g (323.4mmoles) d'acide polyméthacrylique (Mn= 4100 g/mol ; extrait sec = 30%, indice d'acidité 181,1mg KOH/g) puis on introduit 0,48g (5.95mmoles) de soude (solution aqueuse de NaOH à 50% en poids). On procède alors au chargement de 34,35g (46mmoles) de méthoxypolyéthylèneglycol (MPEG) de masse molaire 750 g/mole puis de 91,60g (46 mmoles) de méthoxypolyéthylèneglycol (MPEG) de masse molaire 2000 g/mole et l'on porte la température du milieu réactionnel à 175°C. Lorsque la température du milieu réactionnel atteint 100°C, on met le réacteur sous vide partiel (<20 mbar).

On prend comme T0, temps de début de réaction, le moment où le milieu réactionnel devient homogène. Après 4 h de cuisson à 175°C, on introduit très lentement 4,11 g de synthon acétophosphoné HPAA de l'exemple 1 (4% en poids), et on laisse la réaction d'estérification se poursuivre encore pendant 3 h à 175°C avant de laisser le milieu réactionnel revenir à température ambiante.

On obtient une base anhydre présentant une masse de copolymère greffé de 143,3 g soit 71,7% par rapport au mélange réactionnel initial.

La solution obtenue de copolymère porteur de fonctions carboxyliques, de greffons polyéthers et de motifs gem-acétophosphonique, est ensuite formulée par ajout de 0,5% en poids d'amine oléique à 2 moles d'oxyde d'éthylène (commercialisée sous la dénomination NORAMOX O₂ par CECA) et de 1,2% en poids de tributylphosphate (antimousse).

Enfin, le produit est dilué avec de l'eau pour obtenir un extrait sec de 30% et neutralisé avec de l'hydroxyde de sodium à pH 7.

Le dispersant ainsi préparé est prêt à l'emploi.

Le tableau 1 ci-dessous regroupe les caractéristiques de chacun des polymères obtenus selon les exemples 1, 2A et 2B.

**Tableau 1 : Caractéristiques des polymères selon les exemples 1 et 2**

| Exemple | Mélange réactionnel | % polyox résiduel |
|---|---|---|
| 1A | 27,5% MPEG2000 + acide polyméthacrylique | 1,06 |
| 1B | 38,5% MPEG2000 + acide polyméthacrylique | 0,93 |
| 2A | 27,5% MPEG2000 + acide polyméthacrylique + 4% HPAA | 0,83 |
| 2B | 38,5% MPEG2000 + acide polyméthacrylique + 4% HPAA | 1,12 |

Les pourcentages de polyox résiduels sont obtenus par GPC et sont exprimés en pourcentage massique du milieu réactionnel.

### C. Evaluation des propriétés applicatives

### 1. Pouvoir réducteur d'eau

Afin d'évaluer le pouvoir réducteur d'eau de copolymère, des mortiers ont été formulés en ajoutant lesdits copolymères à titre de superplastifiant.

La composition du mortier préparé est détaillée dans le tableau 2 ci-dessous.

Les exemples ont été mis en oeuvre avec les copolymères des exemples 1A, 1B, e 2A, 2B et avec des copolymères des exemples 1A et 1B auxquels 4% HPAA non greffé (en solution dans la formulation) ont été ajoutés.

Le mortier est préparé selon la procédure suivante :
On a introduit dans le bol d'un malaxeur PERRIER les deux sables, normalisé et FULCHIRON. Après malaxage des sables pendant 30 secondes à une vitesse d'environ 140 tr/mn, on ajoute, en l'espace de 15 secondes, l'eau de pré-mouillage qui représente 1/3 de l'eau totale à introduire. Le mélange est poursuivi pendant 15 secondes avant de laisser reposer la masse pendant 4 minutes. Ensuite on introduit le ciment et le filler calcaire (origine ERBRAY fourni par la Société MEAC) puis le mélange se poursuit pendant 1 minute avant d'ajouter le reste de l'eau de gâchage ainsi que la totalité de l'adjuvant en l'espace de 30 secondes. Le malaxeur est ensuite arrêté quelques instants pour racler les bords du bol de malaxage afin d'avoir une masse bien homogène puis le mélange est poursuivi pendant encore 1 minute à vitesse rapide de 280 t/mn.

**Tableau 2 : Composition du mortier utilisé pour évaluer l'ouvrabilité**

| **Composante** | **Masse [g]** |
|---|---|
| Ciment SPLC 52,5 N | 624.9 |
| Filler ERBRAY | 412.1 |
| Sable AFNOR (granulométrie 0/2) | 1350 |
| Sable FULCHIRON (granulométrie 0/0,5) | 587.7 |
| Eau totale | 375.1 |

L'ouvrabilité des mortiers formulés avec les copolymères a été évaluée par mesure du diamètre d'étalement (slump flow) selon la procédure décrite ci-après.

On remplit un moule sans fond de forme tronconique, de reproduction à l'échelle 0,5 du cône d'Abrams (voir norme NF 18-451, 1981); pour effectuer l'étalement, on soulève le cône perpendiculairement à la plaque en faisant un quart de tour. L'étalement est mesuré à 5, 30, 60, 90 et 120 minutes selon 2 diamètres à 90° avec un mètre à ruban. Le résultat de la mesure d'étalement est la moyenne des 2 valeurs à +/- 1 mm. Les essais sont réalisés à 20°C.

Le dosage du copolymère est déterminé de manière à atteindre un étalement cible compris entre 310 et 330 mm. Sauf indication contraire, le dosage est exprimé en % en poids par rapport au poids du liant total (filler + ciment)).

Les résultats obtenus pour les mortiers formulés avec les copolymères sont rassemblés dans le tableau 3 ci-dessous.

**Tableau 3 : Etalement d'un mortier adjuvanté de copolymères des exemples 1 et 2**

| **EX.** | **greffage** [% molaire] | **Dosage** [%] | **Etalement T** [min] | | | | | **Perte de fluidité** [%] |
|---|---|---|---|---|---|---|---|---|
| | | | 5 | 30 | 60 | 90 | 120 | |
| 1A (27,5% de MPEG) | - | 0,65 | 315 | 320 | 325 | 315 | 285 | 9,5 |
| 1A + 4% en poids HPAA dans la formulation | 4% HPAA sans greffage | 0,70 | 320 | 330 | 330 | 320 | 310 | 3,1 |
| 2A (27,5% de MPEG) | 4% HPAA | 0.55 | 325 | 320 | 330 | 315 | 300 | 7,7 |
| 1 B (38,5% de MPEG) | - | 1,30 | 320 | 300 | 300 | 295 | 290 | 9,4 |
| 1B + 4% en poids HPAA dans la formulation | 4% HPAA sans greffage | 1,30 | 300 | 290 | 280 | 275 | 280 | 6,6 |
| 2B (38,5% de MPEG) | 4% HPAA | 1,10 | 325 | 325 | 325 | 330 | 325 | 0 |

A l'examen des résultats, on constate que le greffage de 4% d'HPAA permet d'abaisser sensiblement le dosage (passage de 0,65% à 0,55% et de 1,3 à 1,1) pour un étalement initial équivalent.

On vérifie par ailleurs que le simple ajout à la formulation témoin de 4% HPAA, qui n'est alors pas greffé au copolymère ne permet pas de modifier le pouvoir réducteur d'eau du copolymère greffé témoin.

L'amélioration du pouvoir réducteur d'eau des copolymères greffés acétophosphoniques peut s'expliquer par une plus grande affinité pour la surface des grains de ciment.

### 2. Amélioration du pouvoir réducteur d'eau avec maintien de fluidité

On constate à la lecture du tableau 3 ci-dessus que l'utilisation d'un additif comportant un copolymère polycarboxylique polyalkoxylé greffé par 4% d'HPAA dans une formulation cimentaire permet une réduction du dosage en superplastifiant avec un maintien de fluidité au cours du temps.

### 3. Sensibilité aux sulfates solubles

Afin d'évaluer l'impact de la présence de sulfates alcalins sur l'efficacité des copolymères des exemples précédents à titre de superplastifiant, on a procédé à des essais avec des mortiers à teneur en sulfates variable.

La teneur en sulfates alcalins des mortiers a été modifiée par ajout de sulfate de sodium en poudre au ciment (0,8% en poids par rapport au poids du ciment en sec/sec). Le mortier a ensuite été préparé selon la formulation indiquée dans le tableau 4 ci-dessous, en ajoutant à l'eau de gâchage le dosage indiqué de copolymère.

L'étalement de ces mortiers a été évalué comme décrit ci-dessus.

**Tableau 4 : Composition du mortier utilisé pour évaluer la sensibilité aux sulfates**

| **Composante** | **Masse** [g] |
|---|---|
| Ciment SPLC 52,5N | 624.9 |
| Filler ERBLAY | 412.1 |
| Sable AFNOR (granulométrie 0/2) | 1350 |
| Sable FULCHIRON (granulométrie 0/0,5) | 587.7 |
| Na₂SO₄ | 2,58 |
| Eau totale | 375.1 |

Les résultats obtenus sont rassemblés dans le tableau 5 ci-dessous. La concentration en sulfates total indiquée tient compte du taux d'alcalins initialement présent dans le ciment, évalué à 0,6% en poids (sec/sec).

Il est observé que l'ajout de sulfate s'accompagne d'une diminution sensible du pouvoir réducteur d'eau. Sans vouloir être lié par une quelconque théorie, cette diminution du pouvoir réducteur d'eau semble être liée à la compétition d'adsorption à la surface des grains de ciment entre le copolymère et les ions sulfates. L'introduction sur le squelette PCP du groupe gem acétophosphonique permet de minimiser fortement cette perte de pouvoir réducteur d'eau, puisque l'on observe un écart d'étalement de 50 mm sur 2 heures entre le PCP non fonctionnalisé et le PCP fonctionnalisé par le groupe acétophosphonique.

**Tableau 5 : Effet des sulfates**

| **EX.** | **Greffage** [% molaire] | **Na₂SO₄ ajouté [%** en poids du ciment] | **Dosage** [%] | **Etalement T** [mm] | | | | |
|---|---|---|---|---|---|---|---|---|
| | | | | 5 min | 30 min | 60 min | 90 min | 120 min |
| 1B | - | - | 1,3 | 330 | 320 | 315 | 310 | 310 |
| 1B | - | 0,35% Na₂O eq ou 0,8% Na₂SO₄ | 1,3 | 230 | 215 | 215 | 210 | 200 |
| 2B | 4% HPAA | 0.3 | 1,1 | 325 | 325 | 325 | 330 | 325 |
| 2B | 4% HPAA | 0,35% Na₂O eq ou 0,8% Na₂SO₄ | 1,1 | 280 | 270 | 260 | 260 | 260 |
| 2B | 4% HPAA | 0,35% Na₂O eq ou 0,8% Na₂SO₄ | 1,4 | 310 | 310 | 315 | 305 | 305 |

On constate que le copolymère selon l'invention supporte des taux de sulfates solubles, notamment sulfates alcalins, dans le ciment bien supérieurs au superplastifiant de référence.

L'utilisation des copolymères selon l'invention à titre de superplastifiant est donc moins sensible vis-à-vis des sulfates solubles, notamment sulfates alcalins, dans les ciments, comparée au copolymère non greffé. Cette observation peut être expliquée par un pouvoir complexant du groupe phosphonate et du groupe carboxylate vis-à-vis des ions calcium supérieur comparé aux ions sulfate.

### 3. Sensibilité aux argiles

Les superplastifiants sont également sensibles à la présence d'argiles dans les compositions, généralement dans les sables.

Afin d'évaluer cette sensibilité des copolymères, l'étalement de mortiers formulés avec un sable pollué par une argile (montmorillonite KSF) a été mesuré et comparé avec celui d'un mortier formulé avec un sable propre non pollué.

Sauf indication contraire, le pourcentage d'argile est exprimé en % en poids sec par rapport au sable total sec, composé du sable AFNOR et du sablon FULCHIRON. L'argile ajoutée est introduite avec le sable avant ajout de l'eau de pré-mouillage.

Les mortiers ont été préparés selon la formulation indiquée dans le tableau 4 ci-dessus, en utilisant du ciment à fort taux d'alcalins (Ciment SPLC 52,5 N) et les copolymères selon l'exemple 1A, 1 B, 2A et 2B.

Les résultats des essais sont présentés dans le tableau 6 ci-dessous.

Ces résultats montrent que les copolymères selon l'invention étudiés permettent une réduction du dosage utilisé pour des performances identiques vis-à-vis de la sensibilisation aux argiles. Les copolymères selon l'invention présentant un taux d'ester plus élevé sont nettement moins sensibles à l'argile présente dans les sables, au point de neutraliser largement l'effet néfaste de 0,5% en poids d'argile (par rapport au sable sec) sur la fluidité de la composition cimentaire.

**Tableau 6 : Effet d'argile**

| **EX.** | **Greffage** [%molaire] | **Argile ajoutée*** [% en poids] | **Dosage** | **Etalement T** [min] | | | | |
|---|---|---|---|---|---|---|---|---|
| | | | | 5 | 30 | 60 | 90 | 120 |
| 1A | - | - | 0,65 | 315 | 320 | 325 | 315 | 285 |
| 1A | - | 0,5 | 0,65 | 260 | 260 | 260 | 245 | 220 |
| 2A | 4% HPAA | - | 0,55 | 325 | 320 | 330 | 315 | 300 |
| 2A | 4% HPAA | 0,5 | 0,55 | 255 | 245 | 245 | 230 | 200 |
| 1B | - | - | 1,3 | 330 | 320 | 315 | 310 | 310 |
| 1B | - | 0,5 | 1,3 | 250 | 230 | 230 | 220 | 200 |
| 2B | 4% HPAA | - | 1.1 | 325 | 325 | 325 | 330 | 325 |
| 2B | 4% HPAA | 0,5 | 1,1 | 305 | 285 | 290 | 295 | 285 |

| | | | | | | | | |
|---|---|---|---|---|---|---|---|---|
| *L'argile ajoutée est une montmorillonite KSF commercialisée par ALDRICH | | | | | | | | |

## Revendications

1. Copolymère comprenant une chaîne principale hydrocarbonée et des groupes latéraux, dans lequel les groupes latéraux comprennent des groupes carboxyliques, des groupes polyoxyalkylés et des groupes gem-acétophosphonés.

2. Copolymère selon la revendication 1, dans lequel les groupes latéraux polyoxyalkylés sont liés à la chaîne principale par une liaison ester, éther ou amide.

3. Copolymère selon l'une des revendications 1 ou 2, dans lequel les groupes latéraux gem-acétophosphonés répondent à la formule (IA) ci-dessous : 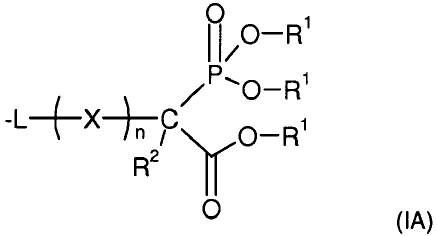 dans laquelle :
L représente un groupe de liaison à la chaîne principale, en particulier une liaison,
un atome d'oxygène, un groupe -NR⁴-, R⁴ pouvant être hydrogène ou un groupe alkyle en C₁ à C₆, un atome de soufre ou un groupe alkylène, de préférence, L est un atome d'oxygène ou un groupe -NR⁴-;
n représente 0 ou 1 ;
X est un groupe espaceur, en particulier un groupe alkylène en C₁ à C₂₀ éventuellement substitué ou un enchaînement de groupes de formule -(QO)ₘ-dans laquelle Q représente un groupe alkylène de 2 à 4 atomes de carbone ou un mélange de ces groupes d'alkylène, m étant un nombre entier variant de 1 à 500, de préférence, X est un groupe alkylène en C₁ à C₆;
R¹ est, indépendamment les uns des autres, un groupe monovalent, notamment hydrogène, un groupe alkyle de C₁ à C₆ ou groupe de formule -(QO)ₘR⁵ dans laquelle Q représente un groupe alkylène de 2 à 4 atomes de carbone ou un mélange de ces groupes d'alkylène, m est un nombre entier variant de 1 à 500 et
R⁵ est hydrogène ou un alkyle en C₁ à C₃, ou R¹ est un cation, notamment un cation alcalin, alcalino-terreux ou ammonium; et
R² est un atome d'hydrogène, un groupe hydroxyle ou groupe alkyle en C₁ à C₁₀.

4. Copolymère selon la revendication 3, dans lequel les groupes gem-acétophosphonés sont de formule (IA), L formant avec un groupe carboxylique du copolymère un fonction amide ou un groupe ester.

5. Copolymère selon la revendication 3 ou 4, dans lequel les groupes gem-acétophosphonés sont de formule (IA), n étant égale à 0.

6. Copolymère selon la revendication 3 ou 4, dans lequel les groupes gem-acétophosphonés sont de formule (IA), n étant égale à 1 et X étant un groupe alkylène en C₁ à C₆.

7. Copolymère selon l'une des revendications 3 à 6, dans lequel les groupes gem-acétophosphonés sont de formule (IA), R¹ étant un atome d'hydrogène ou un cation alcalin, alcalino-terreux ou ammonium.

8. Copolymère selon l'une des revendications 3 à 7, dans lequel les groupes gem-acétophosphonés sont de formule (IA), R² étant un groupe hydroxyle ou un atome d'hydrogène.

9. Copolymère selon l'une des revendications 1 à 8, dans lequel les groupes polyoxyalkylés sont de formule (II) ci-dessous :
-Rₑ-Z-A (II)
dans laquelle :
Rₑ est un groupe alkylène en C₁ à C₁₂ ou un groupe C=O ou encore absent ; et
Z est un atome d'oxygène ou un groupe N-R⁴, R⁴ pouvant être un hydrogène ou
un groupe alkyle en C₁ à C₆ ; et
A est un groupe de formule -(QO)ₘ-R³ dans laquelle :
Q représente un groupe alkylène de 2 à 4 atomes de carbone ou un mélange de ces groupes d'alkylènes ;
m est un nombre entier variant de 1 à 500 ; et
R³ représente un atome d'hydrogène ou un groupe alkyle, aryle, alkylaryle ou arylalkyle en C₁ à C₁₂₋

10. Copolymère selon la revendication 9, dans lequel dans les groupes polyoxyalkylés de formule (II), A est un groupe de formule -(QO)ₘ-R³ dans laquelle R³ est un méthyle.

11. Copolymère selon l'une des revendications 1 à 10, dans lequel les groupes carboxyliques répondent à la formule (III) ci-dessous :
-C(O)-O-R_{d} (III)
dans laquelle :
R_{d} représente H ou un groupe alkyle, aryle, alkylaryle ou arylalkyle en à C₁₂, ou
un cation alcalin, alcalino-terreux ou ammonium.

12. Procédé de préparation d'un copolymère selon l'une des revendications 1 à 11, comprenant les étapes consistant à :
(i) polymériser un monomère portant un groupe carboxylique, éventuellement en présence d'un monomère portant un groupe polyoxyalkylé; et
(ii) greffer le polymère obtenu avec un composé réactif gem-acétophosphoné.

13. Adjuvant pour suspensions de particules minérales comprenant le copolymère selon l'une des revendications 1 à 11, sous forme de solution dans un solvant approprié.

14. Adjuvant selon la revendication 13, comprenant 1 à 50, de préférence 10 à 30% en poids de copolymère par rapport au poids total.

15. Utilisation du copolymère selon l'une des revendications 1 à 11 pour la fluidification de suspensions de particules minérales, et/ou pour le maintien de l'ouvrabilité de liants hydrauliques, et/ou pour réduire la sensibilité de compositions hydrauliques aux argiles, et/ou pour réduire la sensibilité de liants hydrauliques aux sulfates alcalins.

16. Composition de particules minérales comprenant le copolymère selon l'une des revendications 1 à 11.

## Patentansprüche

1. Copolymer, eine Hauptkohlenwasserstoffkette und Seitengruppen umfassend, bei dem die Seitengruppen Carboxylgruppen, polyoxyalkylierte Gruppen und gem-acetophosphonierte Gruppen umfassen.

2. Copolymer nach Anspruch 1, bei dem die polyoxyalkylierten Seitengruppen durch eine Ester-, Ether- oder Amidbindung an die Hauptkette gebunden sind.

3. Copolymer nach einem der Ansprüche 1 oder 2, bei dem die gem-acetophosphonierten Seitengruppen der folgenden Formel (IA) entsprechen: 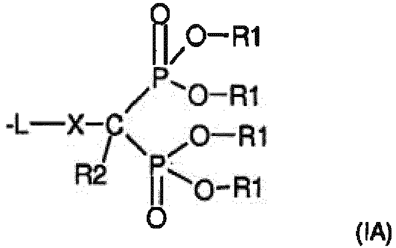 bei der:
L eine Bindungsgruppe an die Hauptkette, insbesondere eine Bindung,
ein Sauerstoffatom, eine -NR⁴-Gruppe, wobei R⁴ ein Wasserstoff oder eine C₁ bis C₆-Alkylgruppe sein kann, ein Schwefelatom oder vorzugsweise eine Alkylengruppe darstellt, L ein Sauerstoffatom oder eine - NR⁴- Gruppe ist;
n 0 oder 1 darstellt;
X eine Spacergruppe ist, insbesondere eine gegebenenfalls substituierte C₁ bis C₂₀-Alkylengruppe, oder eine Verkettung von Gruppen der Formel -(QO)ₘ-, wobei Q eine Alkylengruppe mit 2 bis 4 Kohlenstoffatomen oder eine Mischung aus diesen Alkylengruppen darstellt, wobei m eine ganze Zahl ist, die vorzugweise zwischen 1 und 500 variiert,
X eine C₁ bis C₆-Alkylengruppe mit ist;
R¹ unabhängig voneinander eine monovalente Gruppe, insbesondere Wasserstoff, eine C₁ bis C₆-Alkylgruppe oder eine Gruppe der Formel -(QO)ₘR⁵ ist, in der Q eine Alkylengruppe mit 2 bis 4 Kohlenstoffatomen oder eine Mischung dieser Alkylengruppen darstellt, m eine ganze Zahl ist, die von 1 bis 500 variiert und R⁵ ein Wasserstoff oder ein C₁ bis C₃-Alkyl ist, oder R¹ ein Kation, insbesondere ein Alkali-, Erdalkali- oder ein Amoniumkation, ist; und
R² ein Wasserstoffatom, eine Hydroxylgruppe oder eine C₁ bis C₁₀-Alkylgruppe ist.

4. Copolymer nach Anspruch 3, bei dem die gem-acetophosphonierten Gruppen die Formel (IA) aufweisen, wobei L mit einer Carboxylgruppe des Copolymers eine Amidfunktion oder eine Estergruppe ist.

5. Copolymer nach Anspruch 3 oder 4, bei dem die gem-acetophosphonierten Gruppen die Formel (IA) aufweisen, wobei n gleich 0 ist.

6. Copolymer nach Anspruch 3 oder 4, bei dem die gem-acetophosphonierten Gruppen die Formel (IA) aufweisen, wobei n gleich 1 und X eine C₁ bis C₆-Alkylengruppe ist.

7. Copolymer nach einem der Ansprüche 3 bis 6, bei dem die gem-acetophosphonierten Gruppen die Formel (IA) aufweisen, wobei R¹ ein Wasserstoffatom oder ein Alkali-, Erdalkali- oder Ammoniumkation ist.

8. Copolymer nach einem der Ansprüche 3 bis 7, bei dem die gem-acetophosponierten Gruppen die Formel (IA) aufweisen, wobei R² eine Hydroxylgruppe oder ein Wasserstoffatom ist.

9. Copolymer nach einem der Ansprüche 1 bis 8, bei dem die polyoxyalkylierten Gruppen die folgende Formel (II) aufweisen:
-Rₑ-Z-A (II)
bei der:
Rₑ eine C₁ bis C₁₂-Alkylengruppe oder eine C-O-Gruppe oder noch abwesend ist; und
Z ein Sauerstoffatom oder eine N-R⁴-Gruppe ist, wobei R⁴ ein Wasserstoff oder eine C₁ bis C₆-Alkylgruppe sein kann; und
A eine Gruppe der Formel -(QO)ₘ-R³ ist, bei der:
Q eine Alkylengruppe mit 2 bis 4 Kohlenstoffatomen oder eine Mischung dieser Alkylengruppen darstellt;
m eine ganze Zahl ist, die von 1 bis 500 variiert; und
R³ ein Wasserstoffatom oder eine C₁ bis C₁₂-Alkyl-, C₁ bis C₁₂-Aryl-, C₁ bis C₁₂-Alkylaryl- oder C₁ bis C₁₂-Arylalkylgruppe darstellt.

10. Copoylmer nach Anspruch 9, bei dem in den polyoxyalkylierten Gruppen der Formel (II) A eine Gruppe der Formel -(QO)ₘ-R³ ist, in der R³ ein Methyl ist.

11. Copolymer nach einem der Ansprüche 1 bis 10, bei dem die Carboxylgruppen die folgende Formel (III) aufweisen:
-C(O)-O-R_{d} (III)
in der:
R_{d} H oder eine C₁ bis C₁₂-Alkyl-, C₁ bis C₁₂-Aryl-, C₁ bis C₁₂-Alkylaryl- oder C₁ bis C₁₂-Arylalkylgruppe oder ein Alkali-, Erdalkali- oder Ammoniumkation darstellt.

12. Verfahren zur Herstellung eines Copolymers nach einem der Ansprüche 1 bis 11 mit den Schritten, die darin bestehen:
(i) ein eine Carboxylgruppe tragendes Monomer gegebenenfalls bei Vorhandensein eines eine polyoxyalkylierte Gruppe tragendes Monomer zu polymerisieren; und
(ii) das erhaltene Polymer mit einer reaktiven gem-acetophosphonierten Verbindung zu pfropfen.

13. Hilfsmittel für Suspensionen von Mineralpartikeln, das das Copolymer nach einem der Ansprüche 1 bis 11 umfasst, in Form einer Lösung in einem geeigneten Lösungsmittel.

14. Hilfsmittel nach Anspruch 13, das 1 bis 50, vorzugsweise 10 bis 30 Gew.-% Copolymer in Bezug auf das Gesamtgewicht umfasst.

15. Verwendung eines Copolymers nach einem der Ansprüche 1 bis 11 für die Verflüssigung von Mineralpartikel-Suspensionen und/oder den Erhalt der Bearbeitbarkeit von hydraulischen Bindemitteln und/oder zur Verringerung der Empfindlichkeit von hydraulischen Zusammensetzungen gegenüber Tonen und/oder zur Verringerung der Empfindlichkeit von hydraulischen Bindemitteln gegenüber Alkalisulfaten.

16. Mineralpartikelzusammensetzung, das Copolymer nach einem der Ansprüche 1 bis 11 umfassend.

## Claims

1. A copolymer comprising a main hydrocarbon chain and side groups, wherein the side groups comprise carboxylic groups, polyoxyalkylate groups and gem acetophosphonate groups.

2. The copolymer according to claim 1, wherein the polyoxyalkylate side groups are bound to the main chain through an ester, ether or amide bond.

3. The copolymer according to one of claims 1 or 2, wherein the gem acetophosphonate side groups fit the formula (IA) below: 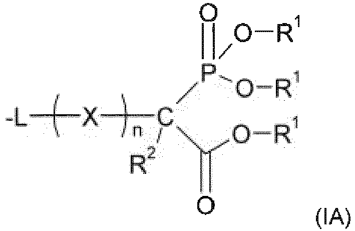 wherein:
L represents a group for binding to the main chain, in particular a bond, an oxygen atom, a group -NR⁴-, R⁴ may be a hydrogen or a C₁-C₆ alkyl group, a sulfur atom or an alkylene group, preferably L is an oxygen atom or a group -NR⁴-;
n represents 0 or 1;
X is a spacer group, in particular a C₁-C₂₀ alkylene group optionally substituted or a sequence of groups of formula -(QO)ₘ- wherein Q represents an alkylene group with 2 to 4 carbon atoms or a mixture of these alkylene groups, m being an integer varying from 1 to 500, preferably, X is a C₁-C₆ alkylene group;
R¹ independently of each other is a monovalent group notably a hydrogen, a C₁-C₆ alkyl group or a group of formula -(QO)ₘR⁵ wherein Q represents an alkylene group with 2 to 4 carbon atoms or a mixture of these alkylene groups, m is an integer varying from 1 to 500 and R⁵ is a hydrogen or C₁-C₃ alkyl, or R¹ is a cation,
notably an alkaline, earth-alkaline, or ammonium cation; and
R² is a hydrogen atom, a hydroxyl group or a C₁-C₁₀ alkyl group.

4. The copolymer according to claim 3, wherein the gem acetophosphonate groups are of formula (IA), L forming with a carboxylic group of the copolymer an amide function or an ester group.

5. The copolymer according to claim 3 or 4, wherein the gem acetophosphonate groups are of formula (IA), n being equal to 0.

6. The copolymer according to claim 3 or 4, wherein the gem acetophosphonate groups are of formula (IA), n being equal to 1 and X being a C₁-C₆ alkylene group.

7. The copolymer according to one of claims 3 to 6, wherein the gem acetophosphonate groups are of formula (IA), R¹ being a hydrogen atom or an alkaline, earth-alkaline or ammonium cation.

8. The copolymer according to one of claims 3 to 7, wherein the gem acetophosphonate groups are of formula (IA), R² being a hydroxyl group or a hydrogen atom.

9. The copolymer according to one of claims 1 to 8, wherein the polyoxyalkylate groups are of the formula (II) below:
-Re-Z-A (II)
wherein:
Rₑ is a C₁-C₁₂ alkylene group or a C=O group or further absent; and
Z is an oxygen atom or a group N-R⁴, R⁴ may be a hydrogen or a C₁-C₆ alkyl group; and
A is a group of formula -(QO)ₘ-R³ wherein:
Q represents an alkylene group with 2 to 4 carbon atoms or a mixture of these alkylene groups;
m is an integer varying from 1 to 500; and
R³ represents a hydrogen atom or a C₁-C₁₂ alkyl, aryl, alkylaryl or arylalkyl group.

10. The copolymer according to claim 9, wherein in the polyoxyalkylate groups of formula (II), A is a group of formula -(QO)ₘ-R³ wherein R³ is a methyl.

11. The copolymer according to one of claims 1 to 10, wherein the carboxylic groups fit the formula (III) below:
-C(O)-O-R_{d} (III)
wherein:
R_{d} represents H or a C₁-C₁₂ alkyl, aryl, alkylaryl or arylalkyl group, or an alkaline, earth-alkaline or ammonium cation.

12. A method for preparing a copolymer according to one of claims 1 to 11, comprising the steps:
(i) polymerizing a monomer bearing a carboxylic group, optionally in the presence of a monomer bearing a polyoxyalkylate group; and
(ii) grafting the obtained polymer with a reactive gem acetophosphonate compound.

13. An admixture for suspensions of mineral particles comprising the copolymer according to one of claims 1 to 11, as a solution in a suitable solvent.

14. The admixture according to claim 13, comprising 1 to 50, preferably 10 to 30% by weight of copolymer based on the total weight

15. The use of the copolymer according to one of claims 1 to 11 for fluidifying suspensions of mineral particles, and/or for maintaining workability of hydraulic binders, and/or for reducing the sensitivity of hydraulic compositions to clays, and/or for reducing the sensitivity of hydraulic binders to alkaline sulfates.

16. A composition of mineral particles comprising the copolymer according to one of claims 1 to 11.
